# EUROPÄISCHE PATENTSCHRIFT

(11) **EP 3 858 580 B1**
(45) Veröffentlichungstag und Bekanntmachung des Hinweises auf die Patenterteilung: **12.06.2024**
(21) Anmeldenummer: 21154335.0
(22) Anmeldetag: 29.01.2021
(51) Int. Cl.: B29C 48/00, B29C 48/32, B29C 49/04

(54) **FORMWERKZEUG ZUM HERSTELLEN VON KUNSTSTOFFVORFORMLINGEN UND WERKZEUGANORDNUNG**
MOULD FOR MANUFACTURING PLASTIC PREFORMS AND TOOL ASSEMBLY
OUTIL DE MOULAGE DESTINÉ À LA FABRICATION DE PRÉFORMES EN MATIÈRE PLASTIQUE ET AGENCEMENT D'OUTIL

(30) Priorität: 31.01.2020 DE 102020102528
(43) Veröffentlichungstag der Anmeldung: 04.08.2021
(73) Patentinhaber: Uwe Rost, 53842 Troisdorf (DE)
(72) Erfinder: NEUMANN, Jörg, 53842 Troisdorf (DE); ROST, Uwe, 53842 Troisdorf (DE)
(74) Vertreter: Neumann Müller Oberwalleney Patentanwälte PartG mbB

(56) Entgegenhaltungen:
- EP-B1- 2 705 941
- DE-A1- 4 305 624
- JP-A- S5 896 528
- US-A- 3 309 443
- US-A- 3 914 366
- US-B1- 6 284 169
- US-B1- 6 773 249

## Beschreibung

Die Erfindung betrifft ein Formwerkzeug zum Herstellen von schlauchförmigen Kunststoffvorformlingen sowie eine Werkzeuganordnung mit einem solchen Formwerkzeug und nachgelagertem Blasformwerkzeug. Mittels eines solchen Formwerkzeugs kann plastifizierter Kunststoff als schlauchförmiger Vorformling aus einem Düsenspalt extrudiert werden, und anschließend in einem nachgelagerten Blasformwerkzeug zu einem Hohlkörper weiterverarbeitet werden.

Aus der gattungsgemäßen US 6 284 169 B1 ist ein Extrusionskopf mit einem Düsengehäuse mit einem Düsenring sowie einem axial verstellbaren Dorn bekannt. Dorn und der Düsenring begrenzen den Düsenspalt, aus dem ein schlauchförmiger Vorformling extrudiert wird. Der Dorn ist mit einer elastisch verformbaren Hülse ausgerüstet, auf die radiale Stellelemente einwirken. Durch Verformung der Hülse ist die Düsenspaltgeometrie über den Umfang veränderbar. Im Schmelzefluss stellen sich Dick- und Dünnstellen ein, deren Verhältnis durch Betätigung der Stellelemente verändert wird. Der Düsenring besteht aus einem maschinenfest angeordneten Ring und einer axial verstellbaren Profilhülse. Profilhülse und Ring haben einen kreisrunden Querschnitt mit einer kreisrunden Innenfläche.

Aus der US 6 773 249 B1 ist ein Extrusionskopf bekannt, mit dem die Wanddicke des schlauchförmigen Vorformlings an der Austrittsöffnung geändert werden kann.

Aus der EP 2 705 941 B1 ist ein Mehrfachextrusionskopf mit einer elastisch deformierbaren Hülse bekannt, mit welcher der Düsenspalt an der Austrittsöffnung verändert wird.

Aus der JPS58096528 A ist eine Blasformvorrichtung bekannt mit einem hohlen und flach geformten Schlauchkopf-Hauptkörper, in dem zwei Teilungswände angeordnet sind. In zwischen den zwei Teilungswänden und dem Hauptkörper definierten Sammelkammern sitzen jeweils planare Kolben verschiebbar ein. Bei angehobenen Kolben wird eine Kunststoffschmelze aus einem Einlass eingespritzt und über vertikale Nuten, Querverteilernuten und Drosselspalte in den Sammelkammern gespeichert. Durch Absenken der Kolben und deren Druck wird die Kunststoffschmelze aus den zwei Sammelkammern über Durchgänge zwischen einem Dorn und einer umgebenden Düse aus den jeweiligen Auslassschlitzen in zwei flächige Vorformlinge extrudiert. Dann werden die beiden flächigen Vorformlinge dem Blasformverfahren unterzogen.

Aus der DE 43 05 624 A1 ist eine Extrusionsform für eine Blasformmaschine bekannt. Die Zuführung der Schmelze erfolgt über kleiderbügelförmige Nuten in einem Dorn, wobei die Nuten eine bogenförmig gekrümmte Oberfläche und eine Querschnittsfläche aufweisen, die von einem oberen Mittelpunkt nach unten abnimmt. An einer Mantelfläche des Dornes ist unterhalb der Nuten ein einziger umlaufender Steg vorgesehen, und die radiale Tiefe der Nuten und der angrenzenden Flächen des Dorns sowie der Durchmesser des Steges sind so gewählt, dass der Druckverlust der Schmelze in einem an den Steg angrenzenden Spalt der Form gleichmäßig über den gesamten Umfang des Steges verteilt ist. Ein Kern ist an der Unterseite des Dorns montiert, der einen elliptischen beziehungsweise ovalen Querschnitt aufweist. Der Dorn ist im Gehäuse axial abgestützt.

Aus der EP 1 897 672 A2 ist ein Formwerkzeug zur Herstellung von bandförmigen Kunststoffvorformlingen aus einem schlauchförmigen Vorformling bekannt. Das Formwerkzeug umfasst mehrere Kanäle, die jeweils eine ringabschnittsförmige Eintrittsöffnung und eine längliche Austrittsöffnung haben. Die ringabschnittsförmigen Eintrittsöffnungen weisen denselben Radius auf und sind über den Umfang verteilt angeordnet und durch radial verlaufende Schneiden voneinander getrennt. Es ist eine Wanddickenregelvorrichtung zur Regelung der Dicke der bandförmigen Vorformlinge vorgesehen.

Aus der DE 103 55 818 A1 ist eine Extrusionsdüse mit Wanddickensteuerung für das Extrusions-Press-Formverfahren bekannt. Die Wandstärke wird durch einen oder mehrere Schieber gesteuert, die in das kreisringförmige Düsenmundstück eingebaut sind. Das Düsenmundstück umschließt den kegelförmigen Düsenkern. Die Innenflächen der Schieber haben einen Innenradius, der dem Außenradius des Düsenkerns entspricht.

Aus der US 5 342 187 B ist eine Anordnung zum Herstellen von Rolladen-Lamellen aus einem extrudierten Kunststoff bekannt. Der Kunststoffschlauch wird mit rundem Querschnitt extrudiert und gelangt anschließend in ein Nachformmittel mit einem Umwandlungsbauteil, in dem der Schlauch von dem Eingangsquerschnitt auf den gewünschten Ausgangsquerschnitt umgewandelt wird. Es ist ein Vakuumsystem vorgesehen, um den Schlauch mittels eines Unterdrucks an die Innenwände des Umwandlungsbauteils anzulegen, welches sich in Richtung zum Ausgangsquerschnitt konisch erweitert.

Aus der DE 10 2012 106 509 A1 ist ein Extrusionswerkzeug zum Extrusionsblasformen von Kunststoffkörpern bekannt. Das Extrusionswerkzeug weist ein axial verstellbares Düsenelement auf. Das Düsenelement besteht aus einem Dorn, der innerhalb eines ringförmigen Extrusionskörpers in Extrusionsrichtung verstellbar angeordnet ist und einen ringförmigen Düsenspalt begrenzt. Durch Verstellung des Dorns ist die Spaltbreite des Düsenspalts auf dem gesamten Umfang veränderbar. Aus dem Düsenspalt treten schlauchförmige Vorformlinge aus, die in einer nachgeschalteten Blasformanlage zu Hohlkörpern aufgeweitet und geformt werden. In einem Ausführungsbeispiel ist ein Breitschlitzwerkzeug zur Extrusion flächiger Schmelzebahnen vorgesehen, die in einer nachgeschalteten Blasformanlage zu schalenförmigen Hohlkörpern geformt werden. Das Düsenelement weist eine Anordnung aus mehreren in Fließrichtung nebeneinander angeordneten Segmenten auf, die als Schieber gestaltet sind.

Der vorliegenden Erfindung liegt die Aufgabe zugrunde, ein Formwerkzeug zum Herstellen von Kunststoffvorformlingen vorzuschlagen, das eine belastungsangepasste Formgebung beziehungsweise effiziente Materialausnutzung der Vorformlinge ermöglicht, die sich einfach zu Hohlkörpern weiterverarbeiten lassen. Weiter besteht die Aufgabe darin, eine entsprechende Werkzeuganordnung mit einem solchen Formwerkzeug und einem nachgelagerten Blasformwerkzeug vorzuschlagen, in dem Kunststoffvorformlinge unter günstiger Materialausnutzung zu Hohlkörpern mit geringem Gewicht blasgeformt werden.

Zur Lösung wird ein Formwerkzeug zum Herstellen von schlauchförmigen Kunststoffvorformlingen gemäß Anspruch 1 vorgeschlagen. Der kleinste Austrittsöffnungsdurchmesser des Ringkanals ist kleiner als das 0,8-fache des Eintrittsöffnungsdurchmessers, und der größte Austrittsöffnungsdurchmesser des Ringkanals ist größer als das 0,9-fache des Eintrittsöffnungsdurchmessers. Die den Ringkanal bildende Außen- und Innenflächen sind so geformt, dass im Längsschnitt durch den größten Austrittsöffnungsdurchmesser betrachtet eine erste Länge des Ringkanals zwischen Eintrittsöffnung und Austrittsöffnung und, im Längsschnitt durch den kleinsten Austrittsöffnungsdurchmesser betrachtet, eine zweite Länge des Ringkanals zwischen Eintrittsöffnung und Austrittsöffnung etwa gleich lang sind, das heißt, eine Abweichung von maximal 5 % in Bezug auf eine aus der ersten und zweiten Kanallänge gemittelten Kanallänge aufweist.

Ein Vorteil des Formwerkzeugs ist, dass sich hiermit aufgrund der unrunden Austrittsöffnung Vorformlinge herstellen lassen, die an die Endkontur des hieraus herzustellenden Endprodukts angepasst sind. Die Wege, welche beim Blasformen von dem plastifizierten Kunststoff in radiale Richtung zurückzulegen sind, sind über den Umfang gesehen verhältnismäßig ähnlich, so dass auch ein Erstarren gleichmäßig über den Umfang erfolgt. Mittels der Stellvorrichtung lassen sich Umfangsbereiche partiell verdicken, so dass eine gute Anpassung an die Belastungsverhältnisse des herzustellenden Endprodukts gegeben ist. Insgesamt kann die Wanddicke des Vorformlings beziehungsweise des hieraus herzustellenden Hohlkörpers gering gehalten werden, so dass der Materialeinsatz und damit das Gewicht verringert werden kann. Durch die Formgebung innerhalb des Formwerkzeugs ist der Vorformling noch im schmelzehei-ßen Zustand, so dass ein günstiges Verformungs- und Fließverhalten gewährleistet ist. Es wird ein an die Endkontur des herzustellenden Hohlkörpers angepasster Vorformling erzeugt, der über den Umfang gleichmäßige Werkstoffeigenschaften hat.

Unter schlauchförmigen Vorformling wird im Rahmen der vorliegenden Offenbarung ein aus einer Extrusions- beziehungsweise Coextrusionsanlage extrudierter, schmelzeheißer Kunststoffrohling aus einer oder mehreren Kunststoffschichten verstanden. Der Vorformling ist anfangs im Querschnitt betrachtet kreisringförmig. Durch das Formwerkzeug wird der kreisringförmige Vorformling entlang des Fließweges zu einem unrunden Vorformling geformt. Der Vorformling hat vorzugsweise eine größere Dicke als Folie, insbesondere größer als 1 mm. Der Kunststoffvorformling kann im Anschluss an den Formgebungsprozess einfach weiterverarbeitet werden, beispielsweise in einem Blasformwerkzeug.

Das Formwerkzeug kann durch seinen Aufbau variabel an die technischen Anforderungen angepasst werden, wobei der Ringkanal zwischen der Eintrittsöffnung und der Austrittsöffnung einen variablen Querschnitt über der Länge aufweist. In Umfangsbereichen des Vorformlings beziehungsweise des hieraus herzustellenden Endprodukts, in denen partiell eine größere Wanddicke erforderlich ist, kann eine Stellvorrichtung eingebaut werden. Dabei versteht es sich, dass die Länge der Stellvorrichtung erforderlichen Abmaße der aufzudickenden Stelle angepasst werden können. Weiter versteht es sich, dass ein oder mehrere Wanddickenvorrichtungen verwendet werden können, die untereinander gleich oder unterschiedlich gestaltet sein können.

Beispielsweise kann eine zweite Stellvorrichtung mit einer, im Querschnitt durch das Formwerkzeug betrachtet, zweiten Stellfläche vorgesehen sein. Die zweite Stellfläche ist parallel zu einer zweiten Dornaußenfläche angeordnet und begrenzt die Austrittsöffnung seitlich. Das zweite Stellelement ist quer zur Strömungsrichtung des Vorformlings verstellbar, um die Dicke der Austrittsöffnung in einem zweiten Umfangsteilbereich partiell zu verändern.

Der Vorteil von zwei oder mehr Stellvorrichtungen ist, dass unterschiedliche Umfangsbereiche des Vorformlings mit unterschiedlichen Dicken und Längen hergestellt werden können. Beispielsweise kann mittels einer ersten Stellvorrichtungen eine erste Wanddicke und erste Länge eingestellt werden und mit einer zweiten Wanddickenvorrichtung eine hiervon abweichende zweite Dicke beziehungsweise zweite Länge.

Es ist vorgesehen, dass zumindest eine Stellvorrichtung im Umfangsbereich der länglichen Dornaußenfläche angeordnet ist. Mit länglicher Außenfläche ist im Rahmen der vorliegenden Offenbarung insbesondere mit umfasst, dass diese, im Querschnitt beziehungsweise Axialansicht betrachtet, entlang ihrer Länge beziehungsweise Umfangserstreckung einen variablen Abstand zur Dornachse aufweist. Für eine einfache Fertigung und Montage ist die längliche Außenfläche insbesondere zumindest im Wesentlichen gerade gestaltet, was auch konvexe oder konkave Krümmungen mit großen Radien von beispielsweise mehr als dem größten Austrittsöffnungsdurchmesser oder einem Vielfachen davon mit einschließt.

Nach einer möglichen Ausführungsform kann zumindest ein Stellelement von zumindest einer der Stellvorrichtungen im Querschnitt durch das Werkzeug betrachtet eine längliche Stellfläche ausweisen, die einem Teilabschnitt der länglichen Dornaußenfläche gegenüberliegend angeordnet ist, und eine daran in Umfangsrichtung anschließende gekrümmte Stellfläche, die einem Teilabschnitt der gekrümmten Dornaußenfläche gegenüberliegend angeordnet ist. Dabei weist die gekrümmte Stellfläche eine größere Krümmung auf, als die längliche Stellfläche.

Eine besonders hohe Flexibilität in Hinblick auf die über den Umfang veränderbaren Wanddicken kann dadurch erreicht werden, dass auch in einem oder mehreren gekrümmten Bereichen der Austrittsöffnung eine Einstellvorrichtung verwendet wird. Hierfür kann in einem oder mehreren gekrümmten Umfangsabschnitten des Dornelements entsprechend ein oder mehrere Düsenschieber vorgesehen sein. Ein Düsenschieber weist insbesondere einen, im Querschnitt durch das Formwerkzeug betrachtet, gekrümmte Stellfläche auf, die gegenüberliegend zur gekrümmten Dornaußenfläche verläuft. Die gekrümmte Dornaußenfläche und das gegenüberliegende Stellelement begrenzen einen gekrümmten Austrittspaltabschnitt in radiale Richtung. Dabei kann das gekrümmte Stellelement quer zur Strömungsrichtung des Vorformlings verstellt werden, um die Dicke der Austrittsöffnung in dem hiervon begrenzten Spaltabschnitt partiell zu verändern.

Vorzugsweise umfasst das Dornelement im Querschnitt betrachtet zumindest zwei gerade Dornaußenflächen, an die jeweils eine gekrümmte Dornaußenfläche stetig beziehungsweise stufenlos anschließt. Im Querschnitt durch das Dornelement betrachtet, ist ein Radius der gekrümmten Dornaußenflächen vorzugsweise kleiner, als der Abstand zwischen den beiden entgegengesetzten geraden Dornaußenflächen, insbesondere kleiner als die Hälfte des Abstands zwischen den beiden geraden Dornaußenflächen. Es versteht sich, dass das Dornelement auch mehr als zwei gerade Dornaußenflächen aufweisen kann beispielsweise drei oder vier. Beispielsweise kann das Dornelement im Querschnitt betrachtet rechteckig geformt sein, mit abgerundeten Kanten.

Generell gilt, dass die Konturen des Werkzeugaußenteils und des Werkzeuginnenteils einander entsprechen beziehungsweise gegengleich gestaltet sind, so dass dazwischen der schlauchförmige Fließkanal in der gewünschten Form gebildet ist. Dementsprechend weist das Werkzeugaußenteil mit ein oder mehreren darin eingesetzten Stellvorrichtungen im Bereich der Austrittsöffnung eine an das Dornelement angepasste Form auf. Beispielsweise hat das Werkzeugaußenteil bei einer rechteckigen Form des Dornelements entsprechend ebenfalls eine Rechteckform im Querschnitt. Durch axiales Verstellen des Dornelements kann die Breite des Ringspalts über den gesamten Umfang verändert werden, wobei Zwischenstellungen zwischen einer vollständig geschlossenen und einer vollständig geöffneten Position des Dornelements möglich sind.

Nach einer bevorzugten Ausführungsform weist das Werkzeugaußenteil in einem geraden Umfangsbereich des Dornelements eine Ausnehmung auf, in der die zumindest eine Stellvorrichtung angeordnet ist. Die Ausnehmung ist insbesondere länger als die Länge des Stellvorrichtung beziehungsweise des Stellelements, so dass die Stellvorrichtung innerhalb der Ausnehmung an der gewünschten Stelle, wo eine partielle Aufdickung benötigt wird, positioniert und dort lösbar mit dem Werkzeugaußenteil verbunden werden kann. Eine mögliche Lücke zwischen einer Seitenwand der Ausnehmung und der Stellvorrichtung kann mit einem weiteren Element, beispielsweise mit einer weiteren Stellvorrichtung beziehungsweise einem unverstellbaren Füllstück geschlossen werden. Auf diese Weise ergibt sich insgesamt eine umlaufend geschlossene Innenfläche der Austrittsöffnung. Für die weiteren Elemente gilt ebenfalls, dass diese vorzugsweise beliebig in der Ausnehmung positionierbar und lösbar mit dem Werkzeugaußenteil verbindbar sind.

Nach einer möglichen Ausführungsform können im Werkzeugaußenteil im Bereich der Ausnehmung Führungsmittel vorgesehen sein, beispielsweise eine Nut oder einen Steg, entlang derer das zumindest eine Stellelement und/oder das Füllstück quer zur Dicken-Stellrichtung in die gewünschte Position bewegbar ist. Das zumindest eine Stellelement und/oder das Füllstück können mittels geeigneter Verbindungsmittel in der gewünschten Position mit dem Werkzeugaußenteil lösbar verbunden werden. In weiterer Konkretisierung kann die Ausnehmung zur Positionierung und Verbindung insbesondere zumindest eine T-Nut aufweisen, die parallel zur Innenfläche des Werkzeugaußenteils verläuft. Die mindestens eine Stellvorrichtung kann mit einem Eingriffsteil, beispielsweise einem Gleitstein, in die T-Nut eingesetzt und entlang dieser verschoben werden. In der gewünschten Position kann die Stellvorrichtung durch geeignete Befestigungsmittel, wie beispielsweise Schraubbolzen, mit dem Werkzeugaußenteil verbunden werden. Die Positionierung und Befestigung eines Füllstückes kann analog erfolgen.

Je nach Anzahl der geraden Abschnitte der Austrittsöffnung kann auch das Werkzeugaußenteil eine entsprechende Anzahl von geraden Ausnehmungen zur Aufnahme von Stellelementen aufweisen. Beispielsweise kann bei Verwendung einer Rechteckdüse die Zahl der Ausnehmungen für gerade Stellelemente, entsprechend der Anzahl von Seitenflächen des Rechtecks, vier betragen.

Die Stellvorrichtung zur partiellen Wanddickeneinstellung umfasst zumindest ein Stellelement mit einer geraden Stellfläche, die den Austrittsspalt seitlich begrenzt und quer zur Strömungsrichtung des Vorformlings verstellbar ist. Die Wanddicke kann statisch oder dynamisch mittels eines Stellantriebs verändert werden. Bei einer dynamischen Verstellung ist eine Steuereinheit vorzusehen, mit der ein jeweiliger Stellantrieb während des Formvorgangs angesteuert wird.

Die Stellvorrichtung beziehungsweise das Stellelement können verschiedene Ausgestaltungen haben. Beispielsweise kann das Stellelement in Form eines Schwenkbalkens gestaltet sein, der um eine quer zur Dornachse verlaufende Schwenkachse durch Betätigung des Stellantriebs schwenkbar ist. Nach einer zweiten Möglichkeit kann das Stellelement auch als Schieber gestaltet sein, der mittels des Stellantriebs normal zur Dornachse verschiebbar ist. Alternativ ist auch die Verwendung einer Flexlippe als Stellelement möglich.

Für ein gleichmäßiges Fließverhalten des Vorformlings ist es günstig, wenn die Innenfläche des Werkzeugaußenteils und die Außenfläche des Werkezuginnenteils derart gestaltet sind, dass sich der dazwischen gebildete Ringkanal in Fließrichtung des Vorformlings verjüngt. Hieraus ergibt sich, dass der Querschnitt des schlauchförmigen Kanals im Bereich der Austrittsöffnung kleiner ist, als im Bereich der Eintrittsöffnung.

Die Innenfläche des Außenteils und die Außenfläche des Innenteils sind insbesondere zueinander komplementär ausgebildet. Vorzugsweise sind die den schlauchförmigen Kanal bildende Außen- und Innenfläche so geformt, dass die Längen der über den Umfang verteilten Stromlinien des Vorformlings, entsprechend den über den Umfangverteilten Längen des Kanals in den jeweils betrachteten Schnittebenen, zwischen kreisringförmiger Eintrittsöffnung und unrunder Austrittsöffnung etwa gleich lang sind, womit Abweichungen von plus minus 5 % in Bezug auf eine mittlere Stromlinienlänge beziehungsweise gemittelte Kanallänge mit umfasst sein sollen.

Nach einer möglichen Ausführungsform kann dem Formwerkzeug ein Extrusionskopf zum Erzeugen eines schlauchförmigen Kunststoffvorformlings vorgeschaltet sein. Als Extrusionskopf kann sowohl ein kontinuierlich arbeitender als auch ein diskontinuierlich beziehungsweise hubweise arbeitender Extrusionskopf zum Einsatz kommen. Zwischen dem Extrusionskopf und dem Formwerkzeug kann bei Bedarf ein Adapterelement zwischengeschaltet sein, um einen möglichen Durchmesserunterschied zwischen der Austrittsöffnung des Extrusionskopfes und der Eintrittsöffnung des Formwerkzeugs zu überbrücken.

Die Aufgabe wird ferner gelöst durch eine Werkzeuganordnung mit einem Formwerkzeug, das nach einer oder mehrerer der oben genannten Ausführungsformen gestaltet ist, sowie mit einem nachgeschalteten Blasformwerkzeug, das mit dem Formwerkzeug lösbar verbunden ist, und dazu ausgestaltet ist, einen vom Formwerkzeug hergestellten unrunden Kunststoffvorformling aufzunehmen und diesen mittels Blasformen an die Innenkontur des Blasformwerkzeugs anzupassen, wobei, jeweils im Querschnitt betrachtet, eine Umfangslänge der Austrittsöffnung des Formwerkzeugs kleiner ist als das 1,3-fache einer größten Innenumfangslänge des Blasformwerkzeugs, insbesondere kleiner ist als das 1,2-fache der größten Innenumfangslänge.

Die Werkzeuganordnung mit Formwerkzeug und Blaswerkzeug bietet im Wesentlichen dieselben Vorteile, wie das Formwerkzeug, so dass diesbezüglich abkürzend auf die obige Beschreibung verwiesen wird. Das Formwerkzeug kann an die Querschnittsform des herzustellenden Endprodukts angepasst werden. So sind die beim Blasformen nötigen Formgrade und Formwege zwischen der Querschnittsform des unrunden Vorformlings und der Querschnittsform des hieraus herzustellenden Hohlkörpers über den Umfang aneinander angepasst. Das Anlegen des Vorformlings an die Innenfläche des Blaswerkzeugs erfolgt über den Umfang gleichmäßiger, so dass auch ein Erstarren des plastifizierten Kunststoffs gleichmäßiger erfolgt. Insgesamt ergibt sich somit eine hohe Fertigungsgenauigkeit hinsichtlich der Wanddicke über dem Umfang des Hohlkörpers. Aufgrund der mindestens einen Stellvorrichtung lassen sich Umfangsbereiche partiell verdicken, so dass eine gute Anpassung an die Belastungsverhältnisse des herzustellenden Endprodukts gegeben ist. Insgesamt kann die Wanddicke des herzustellenden Hohlkörpers gering gehalten werden, so dass der Materialeinsatz und damit das Gewicht verringert werden kann.

Bevorzugte Ausführungsbeispiele werden nachstehend anhand der Zeichnungsfiguren erläutert. Es zeigen
- Figur 1A: ein erfindungsgemäßes Formwerkzeug zum Formen von Kunststoffvorformlingen in perspektivischer Darstellung von schräg unten;
- Figur 1B: das Formwerkzeug aus Figur 1A in Axialansicht von unten;
- Figur 1C: das Formwerkzeug gemäß Schnittlinie 1C-1C aus Figur 1B in geschlossenem Zustand;
- Figur 1D: das Formwerkzeug gemäß Schnittlinie 1D-1D aus Figur 1B in geschlossenem Zustand;
- Figur 1E: das Formwerkzeug gemäß Schnittlinie 1C-1C aus Figur 1B in geöffnetem Zustand;
- Figur 1F: das Formwerkzeug gemäß Schnittlinie 1D-1D aus Figur 1B in geöffnetem Zustand;
- Figur 2: eine Stellvorrichtung des erfindungsgemäßen Formwerkzeugs aus Figur 1 als Einzelheit in dreidimensionaler Darstellung;
- Figur 3A: ein erfindungsgemäßes Formwerkzeug zum Formen von Kunststoffvorformlingen in perspektivischer Darstellung von schräg unten in einer zweiten Ausführungsform mit Eckschieber;
- Figur 3B: das Formwerkzeug aus Figur 3A mit geöffnetem Eckschieber;
- Figur 3C: das Formwerkzeug aus Figur 3A in Axialansicht von unten;
- Figur 3D: das Formwerkzeug aus Figur 3B mit weggeschnittenem Dornelement;
- Figur 3E: das Formwerkzeug gemäß Schnittlinie 3E-3E aus Figur 3C mit geöffnetem Eckschieber;
- Figur 3F: das Formwerkzeug gemäß Schnittlinie 3E-3E aus Figur 3C mit geschlossenem Eckschieber; und
- Figur 4: ein erfindungsgemäßes Formwerkzeug zum Formen von Kunststoffvorformlingen in Axialansicht von unten in einer weiteren Ausführungsform mit modifiziertem Stellelement.

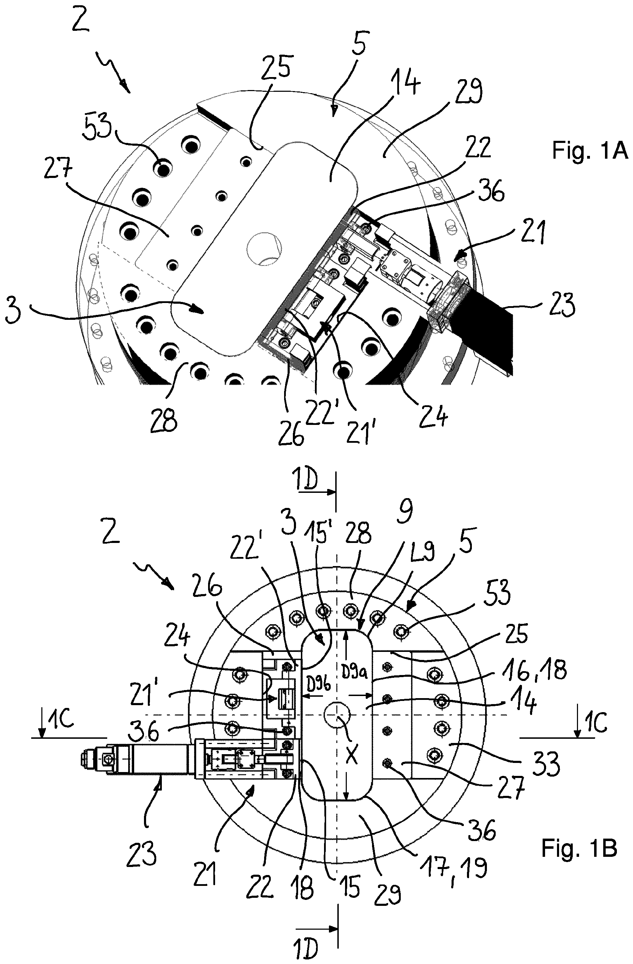

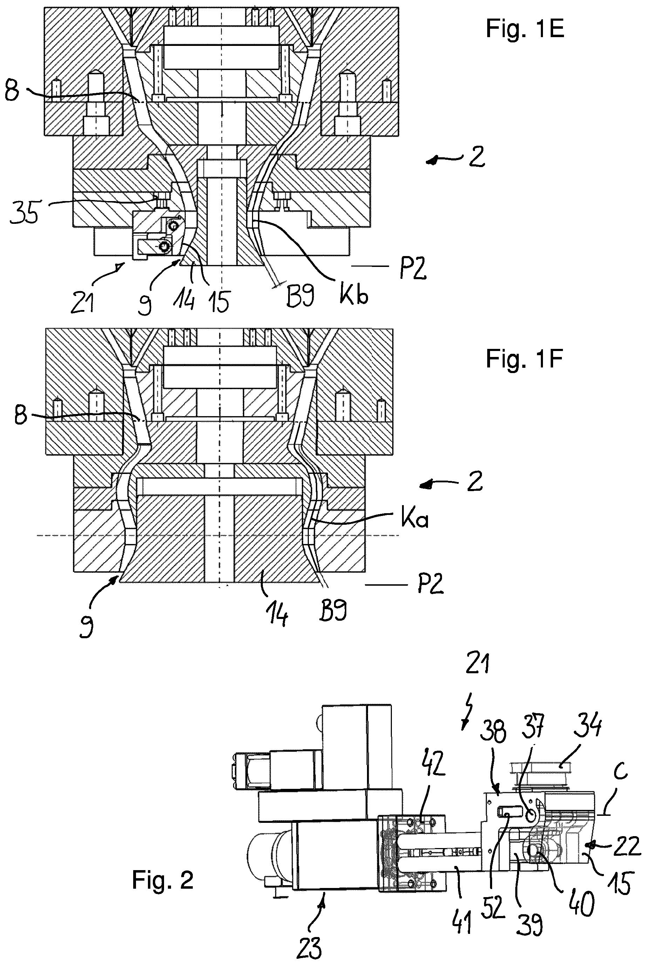

Die Figuren 1A bis 1F und 2, die nachstehend gemeinsam beschrieben werden, zeigen ein erfindungsgemäßes Formwerkzeug 2 zum Herstellen eines schlauchförmigen Vorformlings mit einem unrunden Querschnitt.

Das Formwerkzeug 2 umfasst ein Werkzeuginnenteil 3 mit einer Außenfläche 4 und ein Werkzeugaußenteil 5 mit einer Innenfläche 6. Zwischen dem Werkzeuginnenteil 3 und dem Werkzeugaußenteil 5 ist ein schlauchförmiger Kanal 7 gebildet, der eine runde, insbesondere kreisrunde Eintrittsöffnung 8 mit einem Eintrittsöffnungsdurchmesser D8 und eine unrunde Austrittsöffnung 9 aufweist. Es ist erkennbar, dass der schlauchförmige Kanal 7 zwischen der Eintrittsöffnung 8 und der Austrittsöffnung 9 einen variablen Querschnitt über der Länge L aufweist. Das Formwerkzeug 2 ist so gestaltet, dass die Austrittsöffnung 9 unrund und umlaufend geschlossen ist. Wie insbesondere aus den Figuren 1A und 1B hervorgeht, sind das Werkzeuginnenteil 3 und das Werkzeugaußenteil 4 bei der vorliegenden Ausführungsform so gestaltet, dass die Austrittöffnung 9 eine etwa rechteckige Form aufweist, mit vier geraden Abschnitten 16 und vier gerundeten Eckabschnitten 17, wobei auch beliebige andere unrunde Formen möglich sind. Die Austrittsöffnung 9 hat einen größten Öffnungsdurchmesser D9a, der insbesondere größer als das 0,9-fache des Eintrittsöffnungsdurchmessers D8 ist, sowie einen kleinsten Austrittsöffnungsdurchmesser D9b, der insbesondere kleiner als das 0,8-fache des Eintrittsöffnungsdurchmessers D8 ist.

Es versteht sich, dass das Formwerkzeug auch eine Austrittsöffnung mit einer anderen als der hier gezeigten Form haben kann, beispielsweise eine Ausgestaltung mit nur einer, zwei drei oder gegebenenfalls auch mehr als vier geraden Abschnitten, oder mit gekrümmten konkaven oder konvexen Abschnitten mit großen Radien. Insbesondere ist auch eine etwa ovale Form mit zwei einander gegenüberliegenden geraden Abschnitten möglich. Die Form der Austrittsöffnung 9 wird durch die Form des Werkzeugaußenteils 5 und des Werkzeuginnenteils 3 gebildet, die unter Ausbildung des Fließspalts komplementär zueinander gestaltet sind.

Die Innenfläche 6 des Werkzeugaußenteils 5 und die Außenfläche 4 des Werkzeuginnenteils 3 sind insbesondere so geformt, dass sich der dazwischen gebildete Ringkanal 7 in Fließrichtung des Vorformlings verjüngt und die Längen der über den Umfang verteilten Stromlinien des Ringkanals 7 zwischen der Eintrittsöffnung 8 und der Austrittsöffnung 9 etwa gleich lang sind. Dabei werden die formgebenden Konturen des Werkzeuges durch die Querschnittsform der Austrittsöffnung 9 bestimmt. In den Figuren 1E und 1F sind jeweils in der rechten Bildhälfte beispielhaft eine zentrale erste Kanallänge Ka im Längsschnitt durch den größten Öffnungsdurchmesser (D9a) und eine zentrale zweite Kanallänge Kb im Längsschnitt durch den kleinsten Öffnungsdurchmesser (D9b) eingezeichnet. Dabei sind die zentrale erste und zweite Kanallänge Ka, Kb etwa gleich lang, was eine Abweichung von maximal 5 % in Bezug auf eine gemittelte zentrale Kanallänge einschließt, die aus der ersten und zweiten Kanallänge Ka, Kb oder eine größere Anzahl von mehr als 4 oder 8 regelmäßig über den Umfang verteilten zentralen Kanallängen gemittelt sein kann.

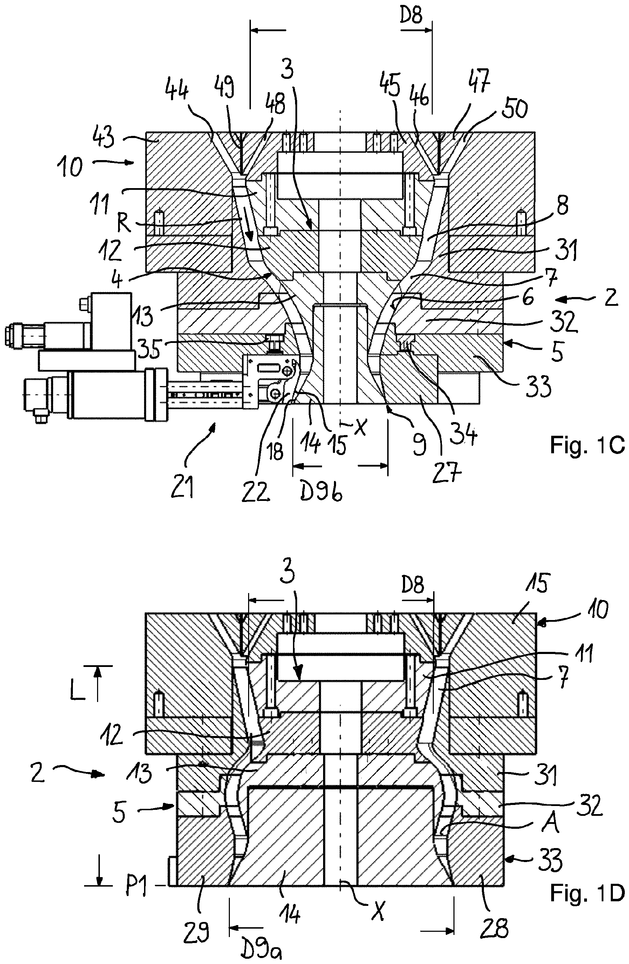

Bei der vorliegenden Ausführungsform ist das Werkzeuginnenteil 4 aus mehreren einzelnen inneren Elementen 12, 13, 14 zusammengesetzt, und das Werkzeugaußenteil 5 ist aus mehreren einzelnen äußeren Elementen 31, 32, 33 zusammengesetzt, wobei es sich versteht, dass je nach Form des Ringkanals auch andere Ausgestaltungen möglich sind. Die runde Eintrittsöffnung 8 kann sich beispielsweise auf eine oberste Querschnittsfläche durch das Werkzeuginnenteil 4 und das Werkzeugaußenteil 5, beziehungsweise deren oberste Elemente 12, 31, beziehen. Die unrunde Austrittsöffnung 9 bezieht sich insbesondere auf eine unterste Querschnittsfläche durch das Werkzeuginnenteil 4 und Werkzeugaußenteil 5, beziehungsweise deren unterste Elemente 14, 33. Die Elemente 12, 13, 14 des Werkzeuginnenteils 4 können durch geeignete Verbindungsmittel miteinander verbunden sein, beispielsweise mittels Schraubverbindungen. Dasselbe gilt entsprechend auch für die Elemente 31, 32, 33 des Werkzeugaußenteils 5. Am unteren Ende des Innenteils 4 ist ein Dornelement 14 vorgesehen, das mittels eines Betätigungselements axial verstellbar ist, um die Austrittsöffnung zu öffnen und zu schließen beziehungsweise auf das gewünschte Öffnungsmaß einzustellen. Die Figuren 1C und 1D zeigen das Dornelement 14 in der eingefahrenen beziehungsweise zurückgezogenen Position, so dass die Austrittsöffnung 9 geschlossen ist. In den Figuren 1E und 1F ist das Dornelement 14 in einer ausgefahrenen Position P2 dargestellt, in welcher der Austrittsspalt 9 entsprechend geöffnet ist. An der Außenfläche des Dornelements 14 kann ein oder mehrere Flexlippen vorgesehen sein (nicht dargestellt), mit denen gegebenenfalls eine Feineinstellung der Spaltbreite vorgenommen werden könnte.

Das Dornelement 14 weist im Querschnitt beziehungsweise in Axialansicht betrachtet vier gerade Dornaußenflächen 18 auf, die über gekrümmte Außenflächen 19, welche die Eckbereiche definieren, miteinander verbunden sind. Erfindungsgemäß ist gegenüberliegend zu wenigstens einer der geraden Dornaußenflächen 18 am Werkzeugaußenteil 5 eine Stellvorrichtung 21 vorgesehen. Die Stellvorrichtung 21 weist ein Stellelement 22 mit einer geraden Stellfläche 15 auf, die parallel zur geraden Dornaußenfläche 18 verläuft und die Austrittsöffnung 9 seitlich begrenzt. Das Stellelement 22 ist mittels eines Stellantriebs 23 quer zur Strömungsrichtung des Vorformlings verstellbar. Mittels des Stellelements 22 kann die Breite der Austrittsöffnung 9 in dem Umfangsteilabschnitt, in dem das Stellelement 22 angeordnet ist, lokal geändert werden. Auf diese Weise lassen sich nach Bedarf partielle Aufdickungen am Vorformling erzeugen.

Wie insbesondere aus Figur 1B hervorgeht, weist das Werkzeugaußenteil 5 bei der vorliegenden Ausführungsform zwei einander gegenüberliegende, sich entlang der langen Kantenseiten des Dornelements 14 erstreckende Ausnehmungen 24, 25 auf. Die Ausnehmungen 24, 25 werden von Seitenabschnitten 28, 29 des Werkzeugaußenteils 5 begrenzt, welche die kurzen Seiten des Dornelements 3 umgeben. In der einen Ausnehmung 24 sind benachbart zueinander eine erste Stellvorrichtung 21, eine zweite Stellvorrichtung 21' und ein Füllstück 26 angeordnet. Zur Vereinfachung ist bei der Stellvorrichtung 21' die Antriebseinheit nicht dargestellt. Beide Stellvorrichtungen 21, 21' können separat mittels einer zugehörigen Antriebseinheit 23 angesteuert werden. Es ist erkennbar, dass die beiden Stellelemente 22, 22' vorliegend eine unterschiedliche Länge haben, so dass sich entsprechend aufgedickte Bereiche mit unterschiedlicher Länge und - durch die individuelle Einstellbarkeit des Spalts - auch unterschiedlicher Dicke einstellen lassen. Die beiden Stellelemente 22, 22' und das Füllelement 26 schließen bündig beziehungsweise dichtend aneinander an. Die gegenüberliegende Ausnehmung 25 wird von einem einzigen Füllstück 27 geschlossen, das seitlich bündig mit den Wandungen des Werkzeugaußenteils 5 abschließt.

Es sind Befestigungsmittel zum Positionieren und Verbinden der Stellvorrichtungen 21, 21' mit dem Werkzeugaußenteil 5 vorgesehen, welche entsprechend den Anforderungen gestaltet sein können. Die Befestigungsmittel umfassen vorliegend Nutensteine 34, die in T-Nuten 35 des Werkzeugaußenteils 5 aufgenommen und in diesen bewegbar sind. Zum Fixieren können Schrauben 36 verwendet werden, welche in Gewindebohrungen der Nutensteine 34 eingeschraubt werden und diese in der gewünschten Position fixieren. Die T-Nuten 35 verlaufen vorzugsweise parallel zur Außenfläche des Dorns 3, so dass die Stellvorrichtungen 21, 21' entlang dieser in die gewünschte Position verschoben werden können. Die Positionierung und Befestigung der Füllstücke 26, 27 kann analog durch geeignete Befestigungsmittel 34, 35, 36 erfolgen.

Es versteht sich, dass die gezeigte Ausführungsform mit zwei Stellvorrichtungen 21, 21' und einem Füllstück 26 auf der einen Seite und einem weiteren Füllstück 27 auf der anderen Seite der Austrittsöffnung 9 nur beispielhaft ist. Die Stellvorrichtungen 21, 21' können nach Bedarf in den Bereichen angeordnet werden, wo lokale Aufdickungen benötigt werden. Es ist auch denkbar, dass auf einer Seite nur eine einzige Stellvorrichtung 21 verwendet wird, die sich über die gesamte Länge der Ausnehmung 24, 25 erstrecken kann oder kürzer als dieses sein kann, wobei in letzterem Fall die Lücken durch Füllstücke zu schließen wären. Ferner ist es möglich, dass auch auf der gegenüberliegenden langen Seite und/oder auch an den kurzen Seiten ein oder mehrere gerade Stellelemente 21 beziehungsweise Füllelemente 26 vorgesehen sein können.

Durch die Anordnung von Stellelementen 21, 21', Füllelementen 26, 27 und übrigen Wandungsabschnitte 28, 29 des Werkzeugaußenteils 5 ergibt sich insgesamt eine umlaufend geschlossene Innenfläche im Bereich der Austrittsöffnung 9. Für die weiteren Elemente gilt ebenfalls, dass diese vorzugsweise beliebig in der Ausnehmung positionierbar und lösbar mit dem Werkzeugaußenteil verbindbar sind.

Eine Stellvorrichtung 21 mit Stellelement 22 und Stellantrieb 23 ist als Einzelheit in Figur 2 dargestellt. Bei der vorliegenden Ausführungsform ist das Stellelement 22 in Form eines Schwenkbalkens gestaltet, der mittels eines Bolzens 37 um eine Schwenkachse C an einem Trägerelement 38 schwenkbar befestigt ist. Die Kraftübertragung vom Stellantrieb 23 erfolgt über eine Betätigungsstange 39, die über ein Schwenklager 40 an einer Rückseite des Stellelements 22 gelenkig befestigt ist. Das Trägerelement 38 ist über Stützelemente 41 mit einer Grundplatte 42 verbunden, an der auch der Stellantrieb 23 befestigt ist. Der Stellantrieb 23 kann beispielsweise als elektromotorischer, hydraulischer oder pneumatischer Antrieb gestaltet sein. Es ist ferner ein Nutenstein 34 erkennbar, der in die T-Nut 35 eingesetzt wird, so dass die Stellvorrichtung entlang des Austrittsspalts 9 in die gewünschte Position bewegbar ist. Zum Fixieren der Position wird das Trägerelement 38 mittels Schrauben 36 mit dem Nutenstein 34 verspannt. Das Trägerelement 38 kann in einer oder beiden Seitenflächen Eingriffsmittel 52 aufweisen, mit denen das Trägerelement 38 mit einem hierzu benachbarten Element formschlüssig in Eingriff bringbar ist, um die beiden Elemente relativ zueinander zu positionieren. Die Eingriffsmittel können beispielsweise eine Nut mit einer gegengleichen Passfeder umfassen. Es versteht sich, dass die hier gezeigte Stellvorrichtung 21 nur beispielhaft ist und andere Ausgestaltungen möglich sind. Beispielsweise kann das Stellelement 22 auch als Schieber gestaltet sein, der mittels des Stellantriebs normal zur Dornachse X verschiebbar ist. Alternativ ist auch die Verwendung einer Flexlippe als Stellelement möglich.

Das erfindungsgemäße Formwerkzeug 2 kann an einen Extrusionskopf 10 angeschlossen werden, von dem nur das Endstück dargestellt ist. Ein Extrusionskopf 10 weist ein ringförmiges Gehäuse 43 mit einer inneren Öffnung 44, eine zentrale Pinole 45 mit einer umlaufenden Außenfläche 46 sowie radial zwischen diesen ein Ringteil 47 auf. Zwischen dem Ringteil 47 und der Pinole 45 ein erster Ringkanal 48 gebildet, innerhalb des Ringteils 47 ein zweiter Ringkanal 49 und zwischen dem Ringteil 47 und dem Gehäuse 43 ein dritter Ringkanal 50. An der Pinole 45 ist eine Pinolenreduzierung 11 angeschlossen, die insbesondere eine sich nach unten konisch verjüngende Außenfläche aufweist. Aus allen drei Ringkanälen 48, 49, 50 wird Extrudat in Richtung zur Ringöffnung 8 gepresst. Dabei laufen die drei Extrudatströme im Mündungsbereich der drei Ringkanäle 48, 49, 50 zusammen, um einen mehrschichtigen Vorformling zu bilden. Bei dem dargestellten Extrusionskopf 10 handelt es sich demnach um eine Coextrusionsanlage, wobei es sich versteht, dass das erfindungsgemäße Formwerkzeug an andere bekannte Extrusionsköpfe angeschlossen werden kann..

An das untere Ende des Formwerkzeugs 2 kann ein Blasformwerkzeug (nicht dargestellt) angeschlossen werden, welche zusammen als Werkzeuganordnung bezeichnet werden können. Hierfür sind in dem Element 33, das auch als Mundstück bezeichnet werden kann, über den Umfang verteilt mehrere Bohrungen 53 vorgesehen (im Seitenabschnitt 29 nicht dargestellt), in die entsprechende Schrauben zur Befestigung des Blaswerkzeugs eingeschraubt werden können. Das Blaswerkzeug ist dazu ausgestaltet, einen vom Formwerkzeug 2 hergestellten unrunden Kunststoffvorformling aufzunehmen und diesen mittels Blasformen an die Innenkontur des Blasformwerkzeugs anzupassen. Dabei ist insbesondere vorgesehen, dass, jeweils im Querschnitt betrachtet, eine Umfangslänge L9 der Austrittsöffnung 9 kleiner ist, als das 1,3-fache, insbesondere kleiner ist als das 1,2-fache einer größten Innenumfangslänge des Blasformwerkzeugs.

Eine solche Werkzeuganordnung bietet den Vorteil, dass der vom Formwerkzeug 2 unrund geformte, über den Umfang geschlossene Vorformling an die Querschnittsform des im Blaswerkzeug herzustellenden Endprodukts angepasst werden kann. Dabei sind die beim Blasformen nötigen Formgrade und Formwege ausgehend von der Querschnittsform des unrunden Vorformlings hin zur Querschnittsform des hieraus herzustellenden Hohlkörpers relativ gleichmäßig über den Umfang. Aufgrund der mindestens einen Stellvorrichtung 21, 21' lassen sich Umfangsbereiche partiell verdicken, so dass eine gute Anpassung an die Belastungsverhältnisse des herzustellenden Hohlkörpers gegeben ist. Die Wanddicke des herzustellenden Hohlkörpers ist insgesamt gering, so dass entsprechend auch der Materialeinsatz und damit das Gewicht des Endprodukts gering sind.

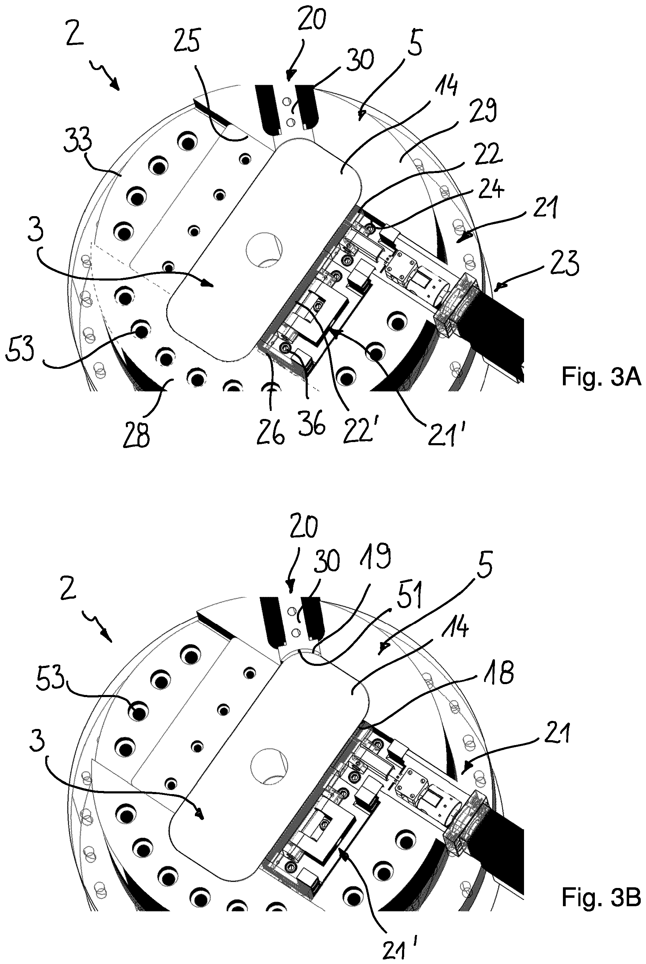

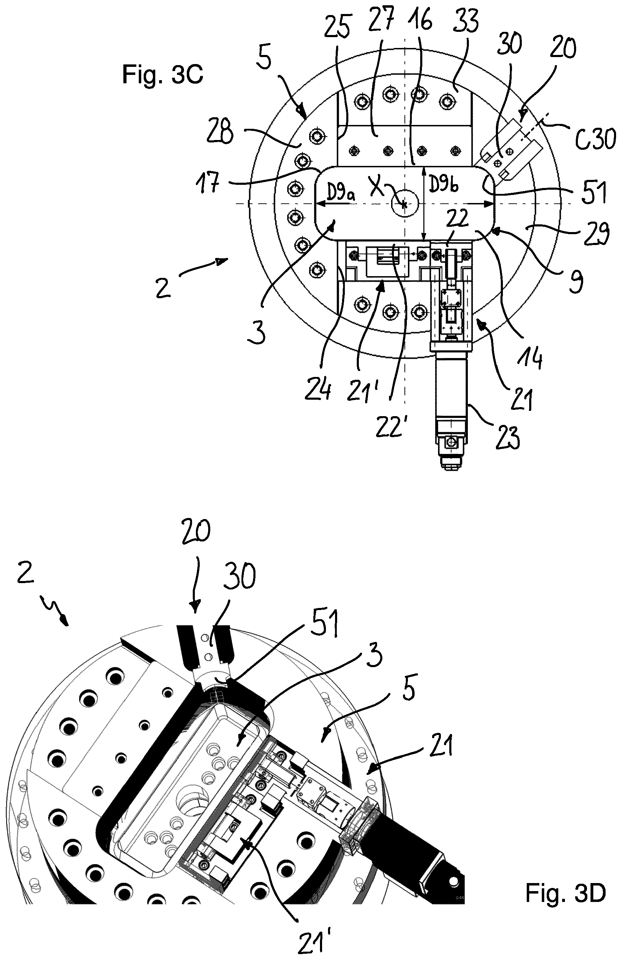

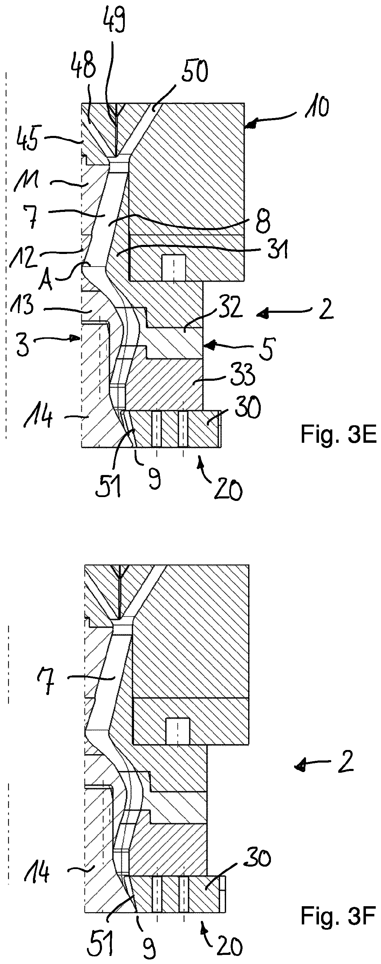

Die Figuren 3A bis 3F, gemeinsam auch als Figur 3 bezeichnet, zeigen ein erfindungsgemäßes Formwerkzeug 2 in einer zweiten Ausführungsform. Diese Ausführungsform entspricht weitestgehend derjenigen gemäß den Figuren 1 und 2, so dass hinsichtlich der Gemeinsamkeiten auf die obige Beschreibung Bezug genommen wird. Dabei sind in Figur 3 gleiche Einzelheiten mit gleichen Bezugsziffern versehen, wie in den Figuren 1 und 2. Nachstehend wird im Wesentlichen auf die Unterschiede eingegangen.

Eine Besonderheit des in Figur 3 gezeigten Formwerkzeugs 2 ist, dass zusätzlich zu den seitlichen Stellvorrichtungen 21, 21' noch ein Eckschieber 20 vorgesehen ist, der in einem gekrümmten Eckbereich des Dorns 3 angeordnet ist. Mit dem Eckschieber 20 lässt sich der Austrittspalt 9 im abgerundeten Eckbereich des Dornelements 3 partiell verändern. Es lassen sich demnach mit Blick auf den aus dem Vorformling herzustellenden Hohlkörper auch im Eckbereich partielle Verdickungen erzeugen, welche hier für eine hohe Stabilität sorgen.

Der Eckschieber 20 hat ein Schiebelement 30 mit einer an die Außenkontur des Dornelements 3 angepassten Innenfläche 51. Das Schiebeelement 30 kann entlang der Achse C30 nach radial außen beziehungsweise radial innen verschoben werden, wodurch der Spalt in diesem Umfangsbereich partiell vergrößert beziehungsweise verkleinert wird. Die Figuren 3D und 3E zeigen das Formwerkzeug 2 in einer nach außen verschobenen, das heißt geöffneten Position des Schiebelements 30, während die Figuren 3C und 3F die nach innen verschobene, geschlossene Position zeigen.

Durch den Einsatz eines Eckschiebers 20 ergibt sich erweiterte Gestaltungsmöglichkeiten hinsichtlich der partiellen Wanddickengestaltung des Vorformlings beziehungsweise des hieraus herzustellenden Hohlkörpers. Es versteht sich, dass die gezeigte Anordnung nur beispielhaft ist, und dass der gezeigte Eckschieber auch an anderen Ecken oder auch an mehreren Ecken verwendet werden könnte.

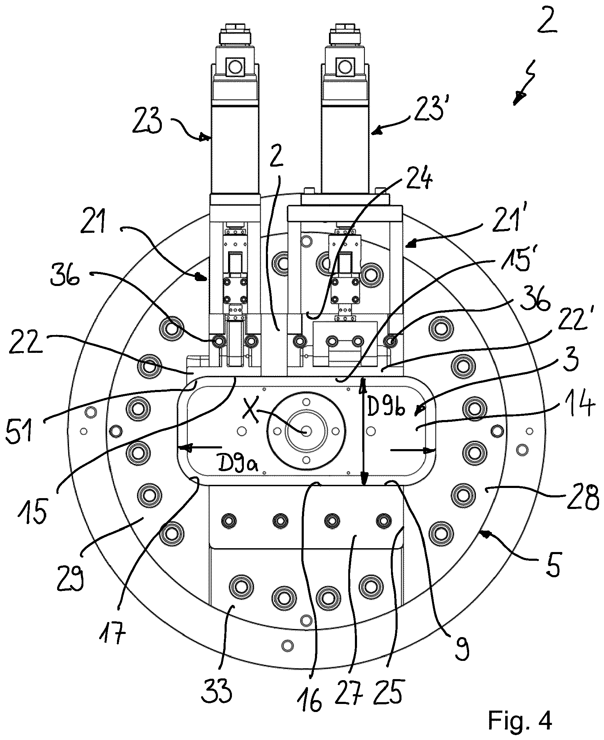

Die Figur 4 zeigt ein erfindungsgemäßes Formwerkzeug 2 in einer weiteren Ausführungsform. Diese Ausführungsform entspricht weitestgehend derjenigen gemäß den Figuren 1 und 2, so dass hinsichtlich der Gemeinsamkeiten auf die obige Beschreibung Bezug genommen wird. Dabei sind in Figur 4 gleiche Einzelheiten mit gleichen Bezugsziffern versehen, wie in den Figuren 1 und 2. Nachstehend wird im Wesentlichen auf die Besonderheiten eingegangen.

Eine Besonderheit des in Figur 4 gezeigten Formwerkzeugs 2 ist, dass die seitliche Stellvorrichtung 21 ein Stellelement 22 mit einer geraden Stellfläche 15 und einer daran in Umfangsrichtung anschließenden gekrümmten Stellfläche 51 aufweist. Die gerade Stellfläche 15 verläuft parallel zur geraden Dornaußenfläche. Die gekrümmte Stellfläche 51 verläuft gegenüberliegend zum gekrümmten Eckbereich des Dorns 14 beziehungsweise Innenteils 3. Mit dem modifizierten Stellelement 22 lässt sich der Austrittspalt 9 sowohl in einem geraden Teilabschnitt des Dornelements 14 als auch in einem Teil des abgerundeten Eckbereichs des Dornelements 14 partiell verändern. Damit lassen sich mit Blick auf den aus dem Vorformling herzustellenden Hohlkörper auch im Eckbereich partielle Verdickungen erzeugen, welche hier für eine hohe Stabilität sorgen.

Die Innenflächen 15, 51 des Stellelements 22 sind an die Außenkontur des Dornelements 14 angepasst. Das Stellelement 22 ist mittels des Stellantriebs 23 quer zur Strömungsrichtung des Vorformlings verstellbar. Neben der Stellvorrichtung 21 ist ein Füllstück 26 und daneben eine weitere Stellvorrichtung 21' mit separatem Stellantrieb 23'. Insofern kann die Dicke des Ringspalt im Bereich der ersten Stellvorrichtung 21 und im Bereich der zweiten Stellvorrichtung 21' individuell beziehungsweise separat voneinander eingestellt werden. Es versteht sich, dass die gezeigte Anordnung nur beispielhaft ist, und dass das gezeigte Stellelement 22 auch an anderen oder mehreren Ecken verwendet werden kann.

### Bezugszeichenliste

- 2: Formwerkzeug
- 3: Werkzeuginnenteil
- 4: Außenfläche
- 5: Werkzeugaußenteil
- 6: Innenfläche
- 7: Kanal
- 8: Eintrittsöffnung
- 9: Austrittsöffnung
- 10: Extrusionskopf
- 11: Element (3)
- 12: Element (3)
- 13: Element (3)
- 14: Dornelement (3)
- 15: Innenfläche
- 16: gerader Abschnitt
- 17: gerundeter Abschnitt
- 18: gerade Dornaußenfläche
- 19: gerundete Dornaußenfläche
- 20: Eckschieber
- 21: Stellvorrichtung
- 22: Stellelement
- 23: Stellantrieb
- 24: Ausnehmung
- 25: Ausnehmung
- 26: Füllstück
- 27: Füllstück
- 28: Seitenteil (5)
- 29: Seitenteil (5)
- 30: Schiebelement
- 31: Element (5)
- 32: Element (5)
- 33: Element (5)
- 34: Nutenstein
- 35: T-Nut
- 36: Schraube
- 37: Bolzen
- 38: Trägerelement
- 39: Betätigungsstange
- 40: Schwenklager
- 41: Stützelement
- 42: Grundplatte
- 43: Gehäuse
- 44: Öffnung
- 45: Pinole
- 46: Außenfläche
- 47: Ringteil
- 48: Ringkanal
- 49: Ringkanal
- 50: Ringkanal
- 51: Innenfläche
- 52: Eingriffsmittel
- 53: Bohrung

- A: Querschnittsfläche
- B: Breite
- C: Achse
- D: Durchmesser
- K: Kanallänge
- L: Länge
- P: Position
- R: Richtung
- X: Achse

## Patentansprüche

1. Formwerkzeug zum Formen von Kunststoffvorformlingen, umfassend:
ein Werkzeuginnenteil (3) mit einer Außenfläche (4);
ein Werkzeugaußenteil (5) mit einer Innenfläche (6);
wobei zwischen der Außenfläche (4) des Werkzeuginnenteils (3) und der Innenfläche (6) des Werkzeugaußenteils (5) ein umlaufend geschlossener Ringkanal (7) mit einer runden Eintrittsöffnung (8) und einer unrunden Austrittsöffnung (9) gebildet ist, wobei die Austrittsöffnung (9) einen größten Austrittöffnungsdurchmesser (D9a) und einen kleinsten Austrittsöffnungsdurchmesser (D9b) aufweist;
wobei das Werkzeuginnenteil (3) ein axial verstellbares Dornelement (14) aufweist, mit dem die Austrittsöffnung (9) über den gesamten Umfang veränderbar ist, wobei das Dornelement (14) im Querschnitt betrachtet zumindest eine längliche Dornaußenfläche (16) aufweist;
wobei am Werkzeugaußenteil (5) eine Stellvorrichtung (21, 21') mit einem Stellelement (22, 22') vorgesehen ist, das sich entlang eines Teilabschnitts der länglichen Dornaußenfläche (16) erstreckt und die Austrittsöffnung (9) seitlich begrenzt, wobei das Stellelement (22, 22') quer zur Strömungsrichtung (R) des Vorformlings verstellbar ist, um die Dicke der Austrittsöffnung (9) in einem Teilbereich zu verändern,
**dadurch gekennzeichnet,**
**dass** der kleinste Austrittsöffnungsdurchmesser (D9b) kleiner ist als das 0,8-fache des Eintrittsöffnungsdurchmessers (D8), und der größte Austrittsöffnungsdurchmesser (D9a) größer ist als das 0,9-fache des Eintrittsöffnungsdurchmessers (D8),
wobei eine erste Kanallänge (Ka) zwischen der Eintrittsöffnung (8) und der Austrittsöffnung (9) in einem Längsschnitt durch den größten Austrittsöffnungsdurchmesser (D9a) betrachtet und eine zweite Kanallänge (Kb) zwischen der Eintrittsöffnung (8) und der Austrittsöffnung (9) in einem Längsschnitt durch den kleinsten Austrittsöffnungsdurchmesser (D9b) betrachtet eine Abweichung von maximal 5 % in Bezug auf eine aus der ersten und zweiten Kanallänge (Ka, Kb) gemittelten Kanallänge aufweist.

2. Formwerkzeug nach Anspruch 1,
**dadurch gekennzeichnet,**
**dass** die längliche Dornaußenfläche (16), im Querschnitt betrachtet, über ihre Länge einen variablen Abstand zur Dornachse (X).

3. Formwerkzeug nach einem der Ansprüche 1 oder 2,
**dadurch gekennzeichnet,**
**dass** eine zweite Stellvorrichtung (21') mit einem zweiten Stellelement (22') vorgesehen ist, das sich, im Querschnitt durch das Formwerkzeug (2) betrachtet, entlang der länglichen Dornaußenfläche (16) erstreckt und die Austrittsöffnung (9) seitlich begrenzt, wobei das zweite Stellelement (22') quer zur Strömungsrichtung (R) des Vorformlings verstellbar ist, um die Dicke der Austrittsöffnung (9) in einem zweiten Teilbereich der länglichen Dornaußenfläche (16) zu verändern.

4. Formwerkzeug nach einem der Ansprüche 1 bis 3,
**dadurch gekennzeichnet,**
**dass** das Dornelement (14) zumindest eine gekrümmte Dornaußenfläche (17) aufweist, und
**dass** ein Düsenschieber (20) vorgesehen ist, der, im Querschnitt durch das Formwerkzeug (2) betrachtet, ein Stellelement (30) mit einer gekrümmten Innenfläche (51) aufweist, die gegenüberliegend zur gekrümmten Dornaußenfläche (17) verläuft und einen Eckbereich der Austrittsöffnung (9) radial begrenzt, wobei das Stellelement (30) quer zur Strömungsrichtung (R) des Vorformlings verstellbar ist, um die Dicke der Austrittsöffnung (9) in dem Eckbereich zu verändern.

5. Formwerkzeug nach einem der Ansprüche 1 bis 4,
**dadurch gekennzeichnet,**
**dass** das Dornelement (14) im Querschnitt betrachtet zumindest zwei längliche Dornaußenflächen (16) aufweist, an die jeweils eine gekrümmte Dornaußenfläche (17) stetig anschließt, insbesondere rechteckig geformt ist mit abgerundeten Kanten, wobei das Werkzeugaußenteil (5) mit eingesetzter Stellvorrichtung (21, 21') eine an das Dornelement (14) angepasste Innenkontur aufweist, wobei, im Querschnitt durch das Dornelement (14) betrachtet, ein Radius der gekrümmten Dornaußenflächen (17) kleiner ist, als der Abstand zwischen den beiden entgegengesetzten länglichen Dornaußenflächen (16), insbesondere kleiner als die Hälfte des Abstands zwischen den beiden länglichen Dornaußenflächen (16).

6. Formwerkzeug nach einem der Ansprüche 1 bis 5,
**dadurch gekennzeichnet,**
**dass** das Werkzeugaußenteil (5) im Umfangsbereich einer länglichen Dornaußenfläche (16) eine Ausnehmung (24, 25) aufweist, in der die zumindest eine Stellvorrichtung (21, 21') insbesondere von einer Stirnseite des Werkzeugaußenteils (5) zugänglich angeordnet ist.

7. Formwerkzeug nach Anspruch 6,
**dadurch gekennzeichnet,**
**dass** die Ausnehmung (24) eine größere Länge entlang der Austrittsöffnung (9) aufweist als das Stellelement (22) der Stellvorrichtung (21), wobei zumindest ein weiteres Element in die Ausnehmung (24) benachbart zur Stellvorrichtung (21) einsetzbar ist, um die Austrittsöffnung (9) radial zu begrenzen.

8. Formwerkzeug nach Anspruch 7,
**dadurch gekennzeichnet,**
**dass** das weitere Element eine weitere Stellvorrichtung (21') mit einem Stellelement (22') und/oder ein Füllstück (26) mit einer gegenüber der Außenfläche des Dornelements (14) unverstellbaren Innenfläche umfasst.

9. Formwerkzeug nach einem der Ansprüche 5 bis 8,
**dadurch gekennzeichnet,**
**dass** das Stellelement (22) im Querschnitt durch das Werkzeug eine längliche Stellfläche (15) aufweist, welche einem Teilabschnitt der länglichen Dornaußenfläche (16) gegenüberliegend angeordnet ist, und eine daran in Umfangsrichtung anschließende gekrümmte Stellfläche (51), welcher einem Teilabschnitt der gekrümmten Dornaußenfläche (17) gegenüberliegend angeordnet ist und eine größere Krümmung aufweist, als die längliche Stellfläche (15).

10. Formwerkzeug nach einem der Ansprüche 6 bis 9,
**dadurch gekennzeichnet,**
**dass** in der Ausnehmung (24, 25) Führungsmittel (34) vorgesehen sind, entlang derer das zumindest eine Stellelement (21, 21') und/oder das Füllstück (26) quer zur Stellrichtung in die gewünschte Position bewegbar ist, sowie Verbindungsmittel (35), mit denen das zumindest eine Stellelement (21, 21') und/oder das Füllstück (26) in der gewünschten Position mit dem Werkzeugaußenteil (5) lösbar verbunden werden kann.

11. Formwerkzeug nach einem der Ansprüche 1 bis 10,
**dadurch gekennzeichnet,**
**dass** das Stellelement (22, 22') der Stellvorrichtung (21, 21') als Schwenkbalken, der um eine quer zur Dornachse (X) liegende Schwenkachse (C) schwenkbar ist, oder als Schieber, der normal zur Dornachse (X) verschiebbar ist, oder als Flexlippe gestaltet ist.

12. Formwerkzeug nach einem der Ansprüche 1 bis 11,
**dadurch gekennzeichnet,**
**dass** die Innenfläche (6) des Außenteils (5) und die Außenfläche (4) des Innenteils (3) derart gestaltet sind, dass sich der dazwischenliegende Ringkanal (7) in Fließrichtung des Vorformlings verjüngt.

13. Formwerkzeug nach einem der Ansprüche 1 bis 12,
**dadurch gekennzeichnet,**
**dass** die Innenfläche (6) des Außenteils (5) und die Außenfläche (4) des Innenteils (3) derart gestaltet sind, dass in jeweiligen Längsebenen betrachtet die Längen (Ka, Kb) des Ringkanals (7) beziehungsweise die Fließwege der Kunststoffteilchen von der Eintrittsöffnung (8) zur Austrittsöffnung (9) über dem Umfang etwa gleich lang sind.

14. Werkzeuganordnung mit einem Formwerkzeug nach einem der Ansprüche 1 bis 13,
sowie mit einem Blasformwerkzeug, das mit dem Formwerkzeug (2) lösbar verbindbar ist, und dazu ausgestaltet ist, einen vom Formwerkzeug (2) hergestellten unrunden Kunststoffvorformling aufzunehmen und diesen mittels Blasformen an die Innenkontur des Blasformwerkzeugs anzulegen, wobei, jeweils im Querschnitt betrachtet, eine Umfangslänge (L9) der Austrittsöffnung (9) des Formwerkzeugs kleiner ist, als das 1,3-fache einer größten Innenumfangslänge des Blasformwerkzeugs.

## Claims

1. Forming tool for forming plastic preforms, comprising:
an inner tool part (3) with an outer face (4);
an outer tool part (5) with an inner face (6);
wherein a circumferentially closed annular channel (7) with a circular inlet opening (8) and a non-circular outlet opening (9) is formed between the outer face (4) of the inner tool part (3) and the inner face (6) of the outer tool part (5), wherein the outlet opening (9) has a largest outlet opening diameter (D9a) and a smallest outlet opening diameter (D9b);
wherein the inner tool part (3) has an axially adjustable mandrel element (14), with which the outlet opening (9) can be varied over the entire circumference, wherein the mandrel element (14) has at least one elongate mandrel outer face (16) when viewed in cross-section;
wherein a setting device (21, 21') with a setting element (22, 22') is provided at the outer tool part (5), which setting element extends along a partial section of the elongate mandrel outer face (16) and laterally limits the outlet opening (9), wherein the setting element (22, 22') is adjustable transversely to the flow direction (R) of the preform in order to change the thickness of the outlet opening (9) in a partial region,
**characterised in**
**that** the smallest outlet opening diameter (D9b) is smaller than 0.8 times the inlet opening diameter (D8), and the largest outlet opening diameter (D9a) is larger than 0.9 times the inlet opening diameter (D8),
wherein a first channel length (Ka) between the inlet opening (8) and the outlet opening (9), viewed in a longitudinal section through the largest outlet opening diameter (D9a), and a second channel length (Kb) between the inlet opening (8) and the outlet opening (9), viewed in a longitudinal section through the smallest outlet opening diameter (D9b), have a deviation of at most 5% with respect to a channel length averaged from the first and second channel lengths (Ka, Kb).

2. Forming tool according to claim 1,
**characterised in**
**that** the elongated mandrel outer face (16), viewed in cross-section, has a variable distance from the mandrel axis (X) over its length.

3. Forming tool according to one of claims 1 or 2,
**characterised in**
**that** a second setting device (21') is provided with a second setting element (22') which, viewed in cross-section through the forming tool (2), extends along the elongate mandrel outer face (16) and laterally delimits the outlet opening (9), the second setting element (22') being adjustable transversely to the flow direction (R) of the preform in order to change the thickness of the outlet opening (9) in a second partial region of the elongate mandrel outer face (16).

4. Forming tool according to any one of claims 1 to 3,
**characterised in**
**that** the mandrel element (14) has at least one curved mandrel outer face (17), and
**that** a nozzle slide (20) is provided which, viewed in cross-section through the forming tool (2), has an setting element (30) with a curved inner face (51) which extends opposite the curved mandrel outer face (17) and radially delimits a corner region of the outlet opening (9), the setting element (30) being adjustable transversely to the flow direction (R) of the preform in order to change the thickness of the outlet opening (9) in the corner region.

5. Forming tool according to any one of claims 1 to 4,
**characterised in**
**that** the mandrel element (14), viewed in cross-section, has at least two elongate mandrel outer faces (16), each of which is continuously adjoined by a curved mandrel outer face (17), in particular of rectangular shape with rounded edges, wherein the outer tool part (5) with inserted setting device (21, 21') has an inner contour adapted to the mandrel element (14),
wherein, viewed in cross-section through the mandrel element (14), a radius of the curved mandrel outer faces (17) is smaller than the distance between the two opposing elongate mandrel outer faces (16), in particular smaller than half the distance between the two elongate mandrel outer faces (16).

6. Forming tool according to any one of claims 1 to 5,
**characterised in**
**that** the outer tool part (5) has a recess (24, 25) in the circumferential region of an elongate mandrel outer face (16), in which recess the at least one setting device (21, 21') is arranged so as to be accessible in particular from an end face of the outer tool part (5).

7. Forming tool according to claim 6,
**characterised in**
**that** the recess (24) has a greater length along the outlet opening (9) than the setting element (22) of the setting device (21), wherein at least one further element is insertable into the recess (24) adjacent to the setting device (21) in order to radially limit the outlet opening (9).

8. Forming tool according to claim 7,
**characterised in**
**that** the further element comprises a further setting device (21') with an setting element (22') and/or a filler piece (26) with an inner face that is not adjustable relative to the outer face of the mandrel element (14).

9. Forming tool according to any one of claims 5 to 8,
**characterised in**
**that** the setting element (22) has an elongate setting face (15) in cross-section through the tool, which is arranged opposite a partial section of the elongate mandrel outer face (16), and a curved setting face (51) adjoining it in the circumferential direction, which is arranged opposite a partial section of the curved mandrel outer face (17) and has a greater curvature than the elongate setting face (15).

10. Forming tool according to any one of claims 6 to 9,
**characterised in**
**that** guide means (34) are provided in the recess (24, 25), along which the at least one setting element (21, 21') and/or the filling piece (26) can be moved transversely to the positioning direction into the desired position, and connecting means (35), with which the at least one setting element (21, 21') and/or the filling piece (26) can be releasably connected to the outer tool part (5) in the desired position.

11. Forming tool according to any one of claims 1 to 10,
**characterised in**
**that** the setting element (22, 22') of the setting device (21, 21') is designed as a pivot beam, which is pivotable about a pivot axis (C) lying transversely to the mandrel axis (X), or as a slider, which is displaceable perpendicularly to the mandrel axis (X), or as a flexible lip.

12. Forming tool according to any one of claims 1 to 11,
**characterised in**
**that** the inner face (6) of the outer part (5) and the outer face (4) of the inner part (3) are designed such that the annular channel (7) formed therebetween tapers in the direction of flow of the preform.

13. Forming tool according to any one of claims 1 to 12,
**characterised in**
**that** the inner face (6) of the outer part (5) and the outer face (4) of the inner part (3) are designed such that, viewed in respective longitudinal planes, the lengths (Ka, Kb) of the annular channel (7) respectively the flow paths of the plastic particles from the inlet opening (8) to the outlet opening (9) are approximately the same length over the circumference.

14. Tool assembly with a forming tool according to one of claims 1 to 13,
and with a blow forming tool which is detachably connectable to the forming tool (2) and is designed to receive a non-circular plastic preform produced by the forming tool (2) and to apply it to the inner contour of the blow forming tool by means of blow forming,
wherein, viewed in cross-section respectively, a circumferential length (L9) of the outlet opening (9) of the forming tool is smaller than 1.3 times a maximum internal circumferential length of the blow forming tool.

## Revendications

1. Outil de formage pour former des préformes en matière plastique, comprenant :
une partie intérieure d'outil (3) avec une surface extérieure (4),
une partie extérieure d'outil (5) avec une surface intérieure (6),
sachant qu'entre la surface extérieure (4) de la partie intérieure d'outil (3) et la surface intérieure (6) de la partie extérieure d'outil (5) est formé un canal annulaire (7) fermé en périphérie avec une ouverture d'entrée ronde (8) et une ouverture de sortie ovale (9), sachant que l'ouverture de sortie (9) comporte un diamètre d'ouverture de sortie (D9a) le plus grand et un diamètre d'ouverture de sortie (D9b) le plus petit, sachant que la partie intérieure d'outil (3) comporte un élément de mandrin (14) axialement réglable avec lequel l'ouverture de sortie (9) peut être modifiée sur toute la périphérie, sachant que l'élément de mandrin (14), vu en coupe transversale, comporte au moins une surface extérieure de mandrin longitudinale (16),
sachant que sur la partie extérieure d'outil (5), un dispositif de réglage (21, 21') avec un élément de réglage (22, 22') est prévu, qui s'étend le long d'une section partielle de la surface extérieure de mandrin longitudinale (16) et limite latéralement l'ouverture de sortie (9), sachant que l'élément de réglage (22, 22') peut être réglé transversalement à la direction d'écoulement (R) de la préforme pour modifier l'épaisseur de l'ouverture de sortie (9) dans une région partielle,
**caractérisé en ce que**
le plus petit diamètre d'ouverture de sortie (D9b) étant inférieur à 0,8 fois le diamètre d'ouverture d'entrée (D8), et le plus grand diamètre d'ouverture de sortie (D9a) étant supérieur à 0,9 fois le diamètre d'ouverture d'entrée (D8),
sachant qu'une première longueur de canal (Ka) entre l'ouverture d'entrée (8) et l'ouverture de sortie (9), vue dans une coupe longitudinale à travers le diamètre d'ouverture de sortie (D9a) le plus grand, et une deuxième longueur de canal (Kb) entre l'ouverture d'entrée (8) et l'ouverture de sortie (9), vue dans une coupe longitudinale à travers le diamètre d'ouverture de sortie le plus petit (D9b), comportent un écart maximal de 5 % par rapport à une longueur de canal calculée en moyenne à partir de la première et de la deuxième longueur de canal (Ka, Kb).

2. Outil de formage selon la revendication 1, **caractérisé en ce que**
la surface extérieure de mandrin longitudinale (16), vue en coupe transversale comporte sur sa longueur une distance variable par rapport à l'axe de mandrin (X).

3. Outil de formage selon l'une quelconque des revendications 1 ou 2, **caractérisé en ce qu'**
un deuxième dispositif de réglage (21') avec un deuxième élément de réglage (22') est prévu, qui s'étend, vu en coupe transversale à travers l'outil de formage (2), le long de la surface extérieure de mandrin longitudinale (16) et limite latéralement l'ouverture de sortie (9), sachant que le deuxième élément de réglage (22') peut être réglé transversalement à la direction d'écoulement (R) de la préforme pour modifier l'épaisseur de l'ouverture de sortie (9) dans une deuxième région partielle de la surface extérieure de mandrin longitudinale (16).

4. Outil de formage selon l'une quelconque des revendications 1 à 3,
**caractérisé en ce que**
l'élément de mandrin (14) comporte au moins une surface extérieure de mandrin (17) courbe, et
**en ce qu'**un curseur de buse (20) est prévu, qui, vu en coupe transversale à travers l'outil de formage (2), comporte un élément de réglage (30) avec une surface intérieure courbe (51), qui passe à l'opposé de la surface extérieure de mandrin courbe (17) et limite radialement une région de coin de l'ouverture de sortie (9),
sachant que l'élément de réglage (30) peut être réglé transversalement à la direction d'écoulement (R) de la préforme pour modifier l'épaisseur de l'ouverture de sortie (9) dans la région de coin.

5. Outil de formage selon l'une quelconque des revendications 1 à 4,
**caractérisé en ce que**
l'élément de mandrin (14), vu en coupe transversale, comporte au moins deux surfaces extérieures de mandrin longitudinales (16) auxquelles se raccorde respectivement en continu une surface extérieure de mandrin courbe (17), en particulier de forme rectangulaire, avec des bords arrondis, sachant que la partie extérieure d'outil (5) avec un dispositif de réglage intégré (21, 21') comporte un profil intérieur adapté à l'élément de mandrin (14),
sachant que, vu en coupe transversale à travers l'élément de mandrin (14), un rayon des surfaces extérieures de mandrin courbes (17) est plus petit que la distance entre les deux surfaces extérieures de mandrin longitudinales opposées (16), en particulier plus petit que la moitié de la distance entre les deux surfaces extérieures de mandrin longitudinales (16).

6. Outil de formage selon l'une quelconque des revendications 1 à 5, **caractérisé en ce que**
la partie extérieure d'outil (5) comporte dans la zone périphérique d'une surface extérieure de mandrin longitudinale (16) un évidement (24, 25) dans lequel est disposé au moins un dispositif de réglage (21, 21') accessible en particulier d'un côté face de la partie extérieure d'outil (5).

7. Outil de formage selon la revendication 6, **caractérisé en ce que**
l'évidement (24) comporte une plus grande longueur le long de l'ouverture de sortie (9) que l'élément de réglage (22) du dispositif de réglage (21), sachant qu'au moins un autre élément peut être inséré dans l'évidement (24) adjacent au dispositif de réglage (21) pour limiter radialement l'ouverture de sortie (9).

8. Outil de formage selon la revendication 7, **caractérisé en ce que**
l'autre élément comprend un autre dispositif de réglage (21') avec un élément de réglage (22') et/ou une pièce de garniture (26) avec une surface intérieure non réglable par rapport à la surface extérieure de l'élément de mandrin (14).

9. Outil de formage selon l'une quelconque des revendications 5 à 8,
**caractérisé en ce que**
l'élément de réglage (22), vu en coupe transversale à travers l'outil, comporte une surface de réglage longitudinale (15), laquelle est disposée opposée à une section partielle de la surface extérieure de mandrin longitudinale (16) et une surface de réglage courbe (51) s'y raccordant en direction périphérique, laquelle est disposée opposée à une section partielle de la surface extérieure de mandrin courbe (17) et comporte une courbure plus grande que la surface de réglage longitudinale (15).

10. Outil de formage selon l'une quelconque des revendications 6 à 9, **caractérisée en ce que**
des moyens de guidage (34) sont prévus dans l'évidement (24, 25) le long desquels au moins un élément de réglage (21, 21') et/ou la pièce de garniture (26) peuvent être déplacés dans la position souhaitée transversalement à la direction de réglage, ainsi que des moyens de liaison (35) avec lesquels au moins un élément de réglage (21, 21') et/ou la pièce de garniture (26) peuvent être reliés de façon amovible dans la position souhaitée à la partie extérieure d'outil (5).

11. Outil de formage selon l'une quelconque des revendications 1 à 10,
**caractérisé en ce que**
l'élément de réglage (22, 22') du dispositif de réglage (21, 21'), est configuré sous la forme d'une barre de pivotement qui peut être pivotée autour d'un axe de pivotement (C) situé transversalement par rapport à l'axe de mandrin (X), sous la forme d'un curseur qui peut être déplacé normalement par rapport à l'axe de mandrin (X) ou sous la forme de lèvre flexible.

12. Outil de formage selon l'une quelconque des revendications 1 à 11,
**caractérisé en ce que**
la surface intérieure (6) de la partie extérieure (5) et la surface extérieure (4) de la partie intérieure (3) sont configurées de telle manière que le canal annulaire (7) situé entre elles se réduit en direction d'écoulement de la préforme.

13. Outil de formage selon l'une quelconque des revendications 1 à 12,
**caractérisé en ce que**
la surface intérieure (6) de la partie extérieure (5) et la surface extérieure (4) de la partie intérieure (3) sont configurées de telle manière que, vues dans les plans longitudinaux respectifs, les longueurs (Ka, Kb) du canal annulaire (7) ou bien les voies d'écoulement des particules de matière plastique de l'ouverture d'entrée (8) à l'ouverture de sortie (9) sont à peu près de longueur identique sur la périphérie.

14. Agencement d'outil avec un outil de formage selon l'une quelconque des revendications 1 à 13,
et avec un outil de formage par soufflage, qui peut être relié de façon amovible à l'outil de formage (2) et est constitué pour recevoir une préforme en matière plastique ovale fabriquée par l'outil de formage (2) et appliquer celle-ci au moyen de moules de soufflage au profil intérieur de l'outil de formage par soufflage, sachant que, vue respectivement en coupe transversale, une longueur périphérique (L9) de l'ouverture de sortie (9) de l'outil de formage est plus petite de 1,3 fois qu'une longueur périphérique intérieure la plus grande de l'outil de formage par soufflage.
